(19) Europäisches Patentamt / European Patent Office / Office européen des brevets

(11) **EP 2 645 323 A1**

(12) **EUROPEAN PATENT APPLICATION**

(43) Date of publication:
**02.10.2013 Bulletin 2013/40**

(51) Int Cl.:
***G06Q 30/00*** *(2012.01)*

(21) Application number: **13159774.2**

(22) Date of filing: **18.03.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **26.03.2012 IN MU02012838** | (71) Applicant: **Tata Consultancy Services Limited 400021 Mumbay (IN)**<br><br>(72) Inventor: **Airani, Rajeev 560 100 Bangalore (IN)**<br><br>(74) Representative: **Hägglöf, Henrik Zacco Sweden AB P.O. Box 5581 114 85 Stockholm (SE)** |

(54) **Brand positioning and promotion impact evaluation system**

(57) Systems and methods described herein relate to brand positioning and promotion impact evaluation for stationary sales brands. According to one embodiment of the present subject matter, an impact output indicative of the competitive brand positioning of each of a plurality of stationary sales brands is generated based on identification of a hidden co-integration relationship that may exist between pairs of brands from amongst the plurality of stationary sales brands. Further, according to another embodiment of the present subject matter, impact of promotional variables on sales of a stationary sales brand is evaluated based on identifying hidden co-integration relationship between the promotional variables and the sales of the stationary sales brand.

Fig. 3

**Description**

TECHNICAL FIELD

The present subject matter relates, in general, to economic modeling, and particularly, but not exclusively, to economic modeling for stationary brand sales.

BACKGROUND

As more and more consumers become brand conscious across the globe, companies consistently strive towards enhancing the value of their brand. Enormous efforts are spent in conducting market research to study relative position of competing brands in a market. Study of the market and analysis of a relative position of their brand with respect to other brands in the market, allows a company to devise strategies for positioning their brand effectively and align their marketing strategies with their short or long term plans.

Marketing strategies commonly include promotions, such as brand promotion to increase customer loyalty, awareness of products, and sales. Instead of focusing on a specific product or products, a company instead focuses on promotion of its brand. Brand promotions can include price promotions, display and internet advertisements, print advertisements etc. Brand promotions may affect the sales of a particular brand of a product. The effect of brand promotions for a brand is evaluated and analyzed, by companies and market researchers, in order to infer an impact of these brand promotions on the sales of the brand.

Various techniques are employed to evaluate and analyze the effect of brand promotions on the sales of a brand. These techniques may generally involve obtaining a time-series, for promotion levels and the sales of the brand. The time series comprises statistical data, for example, relating to investments made in brand promotion and the corresponding increase or decrease in sales for a give time period. The time-series is then evaluated to obtain long term and short term impacts of the brand promotions on the sales of the brand.

SUMMARY

This summary is provided to introduce concepts related to modeling of long term competitive effect and impact of frequency of brand promotion on sales of competing brands having stationary sales, which are further described below in the detailed description. This summary is neither intended to identify essential features of the claimed subject matter nor is it intended for use in determining or limiting the scope of the claimed subject matter.

In an embodiment, the present subject matter discloses a system and a method for brand positioning and promotion impact evaluation. In one implementation, the method for competitive brand positioning of a plurality of stationary sales brands includes decomposing econometric time series of sales data and promotional data for each of the plurality of stationary sales brands into positive and negative shocks and developing cumulative positive shocks and cumulative negative shocks series for each of the plurality of stationary sales brands. The method further includes identifying hidden co-integration relationship between each pair of brands from amongst the plurality of stationary sales brands based on the cumulative positive shocks and the cumulative negative shocks series. Further, the method includes generating an impact output indicative of the competitive brand positioning of the plurality of stationary sales brands based on the hidden co-integration relationship.

Further in an implementation, the method for evaluating impact of promotional variables on sales of a stationary sales brand includes identifying a hidden co-integration relationship between the promotional variables and the sales of the stationary sales brand, wherein the relationship is a representation based on modeling coefficients and a threshold value. The method also includes estimating the modeling coefficients and the threshold value for the hidden co-integration relationship and obtaining a nonlinear impulse response based on the modeling coefficients and the threshold value for the hidden co-integration relationship. Further, the method includes simulating the nonlinear impulse response to evaluate the impact of the promotional variables on the sales for the stationary sales brand.

BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to reference like features and components.

Fig. 1 illustrates a method for modeling competitive brand positioning for competing brands having stationary sales in a category of products, in accordance with an embodiment of the present subject matter.

Fig. 2 illustrates a method of evaluating impact of frequency of brand promotion on sales of brands having stationary sales in a category of products according to one embodiment of the present subject matter.

Fig. 2a and 2b show exemplary responses of the output of method of Fig.2 according to one embodiment of the present subject matter.

Fig. 3 illustrates a brand positioning and promotion impact evaluation system, in accordance with an embodiment of the present subject matter.

DETAILED DESCRIPTION

The present subject matter relates to method(s) and system(s) for modeling of long term competitive effect and impact of frequency of brand promotion on sales of competing brands having stationary sales. In one embodiment, the present subject matter provides for determining positioning of competing brands with respect to each other in a category of products having stationary sales. Further in accordance with another embodiment of the present subject matter, the method(s) and system(s) enable evaluation of long term impacts of brand promotions on the brands having stationary or non-evolving sales.

Assessing current position of a brand with respect to its competitors is important for companies to plan their marketing strategies. Marketing strategies include various types of promotions. Brand promotions, for example, have become an important tool in today's sales and marketing industry for companies and ventures to increase sales of a particular product and build customer loyalty for their respective brands compared to other competing brands existing in a market and offering the same product. Brand promotions have evolved from mouth publicity and paper pamphlets to complex techniques such as price promotions, display advertisements, internet promotions, and the like. Brand promotions may have either a long term impact or a short term impact on the sales of the competing brands. An impact of brand promotions on the sales of the brands is termed as a long term impact if the sales are affected even after the brand promotions are discontinued. On the other hand, if the sales are no longer affected after the brand promotions are discontinued, then the impact is termed as a short term impact.

Generally, the long term impact of brand promotions, herein interchangeably referred to as promotions, on sales of the brands may be evaluated and analyzed in order to get an estimate of how the promotions affect the sales of different brands of a particular product for a fixed period of time. The effect of the promotions on the sales of the brands may be negative or positive in nature. If the sales of a brand increase, then the effect of the promotions may be deemed as a positive effect whereas, if the sales of a brand decrease, the effect may be deemed as a negative effect.

Generally, products such as electronic goods, clothing, footwear, and the like may have evolving or non-stationary sales. For example, for goods such as televisions, the sales may decrease if there is an increase in a world market price of televisions. Further, in another example, the sales of televisions may increase when a major worldwide sporting event is being held. As opposed to brands having evolving or non- stationary sales, many products and brands, especially of the Consumer Product Goods (CPG) category, such as tea, coffee, salt, etc., have non- evolving or stationary sales over a period of time. In other words, for a category of such products, in a given market, the totals sales of all the different brands taken together remains substantially constant and unaffected by factors, such as change in price, availability, environmental factors.

Conventionally, for brands having non- stationary sales, various econometric methods are applied in order to assess the competitive positioning of the brands in the market and to infer the long term impacts of the promotions on these brands. The competitive position and long term impact of the promotions for brands having evolving or non-stationary sales may be determined by various conventional modeling techniques. Typically, these conventional modeling techniques involve formulating a time series of the sales of these evolving brands over a period of time and evaluating the time series by econometric methods, such as Auto Regressive Moving Average (ARMA), Vector Auto Regression (VAR), or Vector Error Correction Models (VECM) if the series are cointegrated. Further the impact of promotion variables is evaluated based on Impulse Response Functions (IRF)

As described previously, the long term impact of frequency of the promotions on a brand may be either positive or negative in nature with respect to the sales of the brand. The positive and negative impacts are herein referred respectively to as positive shocks and negative shocks. Further, the effect of the frequency of the promotions on the plurality of brands having non-stationary sales may be linear or non-linear in nature. For example, if the sales show an increase with an increase in the promotion levels, and a decrease with a decrease in the promotional levels, the effect may be a linear effect. In another example, if the sales show a variable relationship with the promotion levels, the effect may be non-linear. Furthermore, in conventional systems, for one or more non linear time-series, individual positive shocks and negative shocks may be evaluated. The positive shocks and negative shocks may be understood as an increase or decrease in the sales of the brands due to an increase in the promotion levels. Based on the positive shocks and the negative shocks, the long term impact of frequency of the promotions on the sales of the brands is evaluated, for example, by understanding hidden co-integration or otherwise.

The stationary brands described earlier, have stationary sales for a fixed period of time. As may be appreciated, the sales for a plurality of brands may be referred to as stationary, when time series do not have unit roots or are trend/variance stationary or do not have structural breaks.. For such stationary brands, the conventional modeling techniques employing traditional econometric methods, as described above, may not reveal the true long term competitive effects. Additionally, the conventional modeling techniques also fail to give an accurate estimation of the long term impact of the frequency of the promotions on the sales of the brands if their sales are stationary. As described previously, for determining the long term impact of the frequency of the promotions on the sales of the brands, individual positive and negative shocks, on the time-series of the sales, are evaluated and analyzed. For stationary sales, i.e., where cumulative positive and negative shocks are taken into account, the conventional systems fail to provide a near-accurate estimation, since conventional co-integration is not applicable to such situations because of which for stationary sales it does not help to understand long term impacts or relationships. Thus, the above stated econometric methods are incapable of indicating correct competitive position of the brands as well as of evaluating impacts of the frequency of the promotions to the brands having stationary sales.

As may be appreciated by a person skilled in the art, in various markets, such as CPG markets, where the overall sales of the plurality of brands are stationary, the long term impact of the frequency of the promotions on the sales of the plurality of brands has a decreasing positive proportionality with frequency of the promotions. Thus, understanding the nonlinear relationship between the brand sales and frequency of promotions is important since a high amount of capital is invested in the promotions, the need for estimating the optimal amount of the frequency of the promotions, in order to get desired returns, becomes all the more important. None of the conventional systems give an estimate of type of nonlinear effect of the frequency of the promotions, onto the sales of the brands.

System (s) and method (s) for modeling of long term competitive effect and impact of the frequency of the promotions on sales of competing brands having stationary sales, are described herein. The present subject matter provides for determining positioning of competing brands with respect to each other in a stationary sales market as well as for evaluation of long term impacts of the frequency of the promotions on the brands having stationary or non- evolving sales.

In one embodiment, the long term impact of the promotions on the sales of the brands may be determined by formulating an econometric time-series for a plurality of brands having stationary sales. The plurality of brands may be understood as brands whose sales cumulatively contribute to the overall consistent brand sales for a given product or product category in a particular market. The econometric time series may be formulated based on historical sales and promotion data and other forecasting tools. In an example, the historical data may include data pertaining to yearly sales, amount invested in promotions, amount of products manufactured, increase or decrease in price, and the like.

In an implementation, positive and negative shocks for each of the plurality of brands may be identified from the formulated econometric time series for the sales as well as the promotion data. The positive and the negative shocks may be identified in order to estimate impacts of promotional variables on each of the plurality of brands for a fixed period of time. The positive and negative shocks, as described previously, may be indicative of an increase or decrease in sales of a brand, for a period of time for which the econometric time series is formulated.

Further, the econometric time series pertaining to the sales and promotion data for each of the brands may be represented as a function of the cumulative positive shocks and the cumulative negative shocks of the brands. Subsequent to the representation, the cumulative positive shocks and the cumulative negative shocks, of the plurality of brands, are co- integrated which is refrred to as "hidden co- integration". These hidden co- integration relationships that may exist between any two brands from amongst the plurality of brands are identified based on the function of the cumulative positive shocks and the cumulative negative shocks. Based on the identified hidden co- integration relationships, the competitive brand positioning may be determined for the brands.

In an implementation, the competitive brand positioning may be depicted in a brand competitive positioning matrix. For example, the cumulative negative shocks that are indicative of a relationship between the increase or decrease in the sales of a brand with respect to the increase and decrease of a competing brand may be depicting in the brand competitive positioning matrix. The relationship, for example, may include Gain-Gain relationship, Gain-Loss Relationship, Loss-Gain relationship, and the like. Based on the brand competitive positioning matrix, the relationship of sales of two or more competing brands, based on the promotions, may be analyzed.

In one embodiment, based on their current positioning or based on a target position that a company may aspire to attain in future, the company make take initiatives such as the promotions. For a company making investments in terms of the promotions in a stationary sales category, a foresight regarding the impact of the promotion may be required. For example, if a company uses the promotions for increasing the sales of a brand, it may be possible that, after a period of time the effect of the promotions on the sales of the brands is nullified, i.e., the sales become constant even when there is an increase in the frequency of the promotions. In another scenario, the sales may increase but not in proportion to the increase in the frequency of the promotions.

In accordance with one embodiment of the subject matter, the cumulative positive shocks and the cumulative negative shocks in the sales and promotion time series, of a brand are analyzed to indentify a relationship that may exist between the sales of the brand and the corresponding promotional variables. Based on hidden co-integration relationship that may be identified, an error correction/regression model is employed to estimating coefficients and frequency of promotion effect may be calculated based on the threshold values associated with the relationship and estimated coefficients. Using the coefficients and threshold values a nonlinear generalized impulse response may be applied to the relationship. Simulation of the generalized impulse response using a simulating model evaluates the long/short term impact of the frequency ofpromotional variables on the sales of the brand.

In an implementation, the effect of the frequency of the promotions on the sales of the brands may be evaluated based on simulation of impulse response functions (IRF) derived from the relationship. In an example, a simulated IRF graph representing the effect of change in the promotion levels on the sales of each of the plurality of brands may be plotted for a fixed period of time, in order to evaluate an effect of the frequency of promotion levels on the sales of each of the plurality of brands. Accordingly, based on the frequency promotion graph an optimal frequency of the promotions may be estimated.

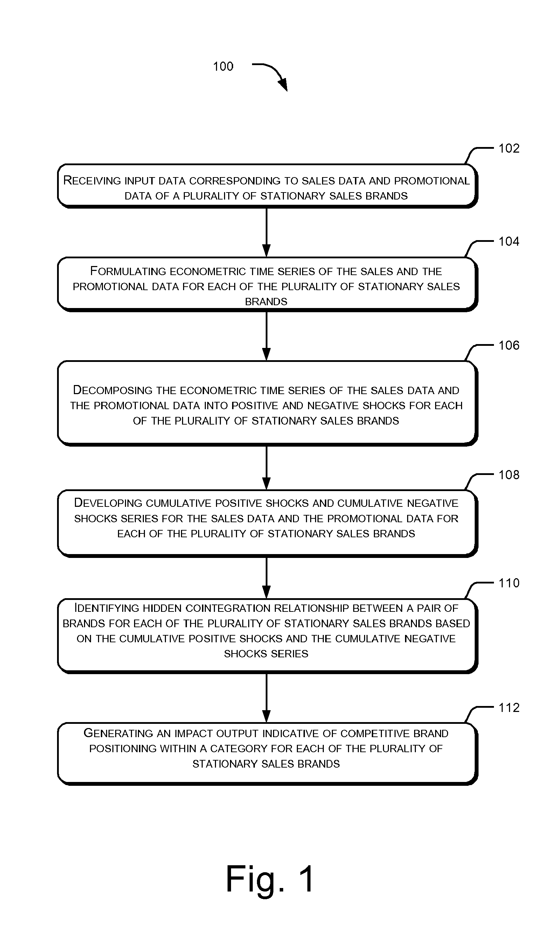

Figure 1 illustrates a method 100 for evaluating competitive brand positioning of a plurality of stationary sales brands, in accordance to an embodiment of the present subject matter. The method 100 is implemented in computing device, such as a system. The method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network.

The order in which the method is described is not intended to be construed as a limitation, and any number of the described method blocks can be combined in any order to implement the method, or an alternative method. Additionally, individual blocks may be deleted from the method without departing from the spirit and scope of the subject matter described herein. Furthermore, the method can be implemented in any suitable hardware, software, firmware, or combination thereof.

At block 102, the method 100 includes receiving input data corresponding to sales data and promotional data of the plurality of stationary sales brands according to an embodiment of the present subject matter. In one example of the method 100 depicted herein, the sales data and the promotional data is received for two brands, i.e., brand A and brand B. The present example is used only for the purposes of illustration, it will be understood that in various other examples, the sales data and the promotional data can be received for any number of stationary sales brands wherein the number corresponds to the key contributors to the cumulative stationary sales. The sales data corresponding to brand A is represented in table 1 below.

**Table 1**

| Time(weeks) | Brand A sales |
|:---:|:---:|
| 1114 | 76892 |
| 1115 | 87168 |
| 1116 | 200603 |
| 1117 | 159511 |
| 1118 | 119724 |
| 1119 | 89636 |
| 1120 | 117921 |
| 1121 | 87021 |
| 1122 | 91205 |

In a similar way, the promotional data corresponding to brand A may also be obtained. Further, similarly, the sales data and the promotional data corresponding to brand B is also obtained.

At block 104, the method includes formulation of an econometric time series for the sales data and the promotional data of brand A and brand B based on the data obtained earlier. In one implementation, the formulation of the time series is based on equation (1) as follows:

$$x_t = \{x_0 x_1 x_2 \ldots x_T\} \qquad t = 0,1,2,,,,,,,,T \ (1)$$

Wherein, $x_t$ represents a general time series function and t represents time periods for analyzing the trend of the time series function.

The econometric time series as obtained for the sales data and the promotional data of brand A may be represented as

$x_{ASt}$ and $x_{APt}$ respectively and for the sales data and the promotional data for brand B may be represented as $x_{BSt}$ and $x_{BPt}$ respectively.

At block 106, the method 100 further decomposes the econometric time series of the sales data and the promotional data into positive and negative shocks for each of the plurality of stationary sales brands. In the present example, the sales data and the promotional data of brand A and brand B, i.e., $x_{ASt}$ and $x_{APt}$ and $x_{BSt}$ and $x_{BPt}$ respectively may be decomposed into positive and negative shocks.

Further in an implementation, at block 108, cumulative positive (+ve) shocks and cumulative negative (-ve) shocks series for the sales data and the promotional data are developed based on the decomposed econometric time series. Referring again to the present example, for brand A and brand B cumulative positive (+ve) shocks and cumulative negative (-ve) shocks series are developed.

In one implementation, the formulation of the cumulative positive (+ve) shocks and cumulative negative (- ve) shocks series is based on a concept that any time series $x_t = \{x_0 x_1 x_2 \ldots x_T\}$ t = 0, 1, 2,, , , , , , T as depicted in equation (1) can be decomposed as follows:

$$x_t = x_0 + x_t^+ + x_t^- \qquad t = 1,2,,,,,,,,,T \ (2),$$

where $x_t^+$ and $x_t^-$ respectively denote the cumulative sums of the positive and negative shocks defined by the series at time t as:

$$x_t^+ = \sum_{i=0}^{t-1} 1\{\Delta x_{t-i} > 0\} \Delta x_{t-i} \ (3a)$$

$$x_t^- = \sum_{i=0}^{t-1} 1\{\Delta x_{t-i} < 0\} \Delta x_{t-i} \ (3b)$$

where, $1\{\Delta x_{t-i}\}$ is the indicator function taking the value 1 if the event in brackets occurs and zero otherwise.

In this context the econometric time series $x_{ASt}$, $x_{APt}$, $x_{BSt}$, $x_{BPt}$ of order one are not cointegrated but their components may behidden cointegrated. In other words, there may exist a a vector β' depicted below that defines a stationary series of the sales data of brand A and the sales data of brand B derived from hidden co- integration.:

$$\beta' = (\beta_0, \beta_1, \beta_2, \beta_3), \beta \neq 0, \text{ such that } \beta_0 x_{ASt}^+ + \beta_1 x_{ASt}^- + \beta_2 x_{BSt}^+ + \beta_3 x_{BSt}^-$$

wherein $(\beta_0, \beta_1, \beta_2, \beta_3)$ represents vector coefficients and the equation represents a stationary series comprising cumulative positive and cumulative negative sales shocks for brand A and brand B.

In a similar way, stationary series are obtained for the promotional data of brand A and the promotional data of brand B.

In an implementation, the data corresponding to a sales cumulative positive shocks and cumulative negative shocks series for brand A is developed as shown in table 2 below.

**Table 2**

| Time | Brand A sales | Brand A positive shocks | Brand A negative shocks |
|------|---------------|-------------------------|-------------------------|
| 1114 | 76892 | 0 | 0 |
| 1115 | 87168 | 0 | -10276 |
| 1116 | 200603 | 0 | -123711 |
| 1117 | 159511 | 41092 | -123711 |
| 1118 | 119724 | 80879 | -123711 |
| 1119 | 89636 | 110967 | -123711 |
| 1120 | 117921 | 110967 | -151996 |
| 1121 | 87021 | 141867 | -151996 |

(continued)

| Time | Brand A sales | Brand A positive shocks | Brand A negative shocks |
|------|---------------|-------------------------|-------------------------|
| 1122 | 91205 | 141867 | -156180 |
| | | Cumulative positive shocks= 627639 | Cumulative negative shocks= -965292 |

In a similar way, the data corresponding to brand A promotions may be used to develop a promotions cumulative positive and negative shocks series. Also, as evident, in the present example, a sales as well as promotion cumulative positive and negative shocks series may be made or brand B.

At block 110, the method 110 identifies hidden co-integration relationship between each pair of brands from amongst the plurality of stationary sales brands based on the cumulative positive shocks and the cumulative negative shocks obtained earlier. According the abovementioned example, In one implementation, the identification of the hidden co-integration relationship between brand A and brand B is done by formulating a set of equations comprising of the cumulative positive shocks, the cumulative negative shocks and an error correction term as:

A positive shock for brand A as a function of positive shock for brand B

$$x_{At}^+ = \beta^+ x_{Bt}^+ + z_{1t} \ (4)$$

A negative shock for brand A as a function of negative shock for brand B

$$x_{At}^- = \beta^- x_{Bt}^- + z_{2t} \ (5)$$

A positive shock for brand A as a function of negative shock for brand B

$$x_{At}^+ = \gamma^- x_{Bt}^- + z_{3t} \ (6)$$

A negative shock for brand A as a function of positive shock for brand B

$$x_{At}^- = \gamma^+ x_{Bt}^+ + z_{4t} \ (7)$$

Where $\beta$ represents a positive parameter, $\gamma$ represents a negative parameter and $z_{1t}$, $z_{2t}$, $z_{3t}$, $z_{4t}$ represents the error correction term.

Similarly, the set of equations are formulated for brand A's sales and promotions and brand B's sales and promotions.

Further in an implementation, the identification of the hidden co-integration relationship between brand A and brand B is based on satisfaction of the set of equations (4), (5), (6), (7) described earlier. In an example, satisfaction criteria for the set of equations is given by Dickey Fuller test as follows:

A first satisfaction criteria may define that if all the equations (4), (5), (6), (7) hold true then there exist co-integration relationship between brand A and brand B. This signifies "Symmetric" relation among brand A and brand B.

A second satisfaction criterion may provide that if equations (4) and (5) hold true then there exist hidden co-integration relationship between brand A and brand B. In such a case, Brand A and brand B react similarly to the promotional shocks. This signifies "Symmetric" relation among brand A and brand B.

A third satisfaction criteria may state that i equations (6) and (7) hold true then brand A and brand B may competitively hurt each other in their share in long run. This signifies "either lose or gain from each other" relation among brand A and brand B.

Further a fourth satisfaction criteria may define that if either of equations (6) or (7) hold true then one of brand A and brand B has competitive advantage over the other in the long run. This signifies "Assymetric" relation among brand A and brand B.

At block 112, the method 100 produces an impact output based on the set of equations (4), (5), (6), (7) described earlier. In one example, the impact output may be in the form of brand competitive positioning matrix. The brand competitive positioning matrix signifies the competitive brand positioning of each of the plurality of stationary sales brands with respect to the other brands.

For purposes of illustration, consider a case where the method 100, as explained above, is implemented to determine brand positioning of stationary sales brands in a category comprising seven significant players Brand 1 to Brand 7. In the given case, the outcome of the method 100 may be the brand competitive positioning matrix showing competitive brand positioning for seven brands as shown below in Table 3.

**Table 3**

|  | Brand 1 | Brand2 | Brand 3 | Brand 4 | Brand 5 | Brand 6 | Brand 7 |
|---|---|---|---|---|---|---|---|
| Brand 1 | - | Asymmetrical ly favors Brand 2 | None | None | None | None | Lose to each other/ together, but do not gain together |
| Brand 2 | - | - | Symmetric | None | None | None | None |
| Brand 3 | - | - | - | None | None | None | None |
| Brand 4 | - | - | - | - | Lose to each other | Lose to each other | None |
| Brand 5 | - | - | - |  | - | Symmetric | None |
| Brand 6 | - | - | - | - | - | - | Symmetric |
| Brand 7 | - | - | - | - | - | - | - |

As mentioned previously, the brand competitive positioning matrix allows determination of a Gain-Gain relationship, Gain-Loss Relationship, or Loss-Gain relationship relation that may exist between a pair of brands. This provides for analysis of the position of a brand with respect to each of the other brand in that category.

Further in an example, based on the brand competitive positioning matrix other impact outputs, such as a competitor watch list table may be obtained. In an implementation, to generate the competitor watch list table each of the relationships, as determined by equation (4) to (8) may be represented by a score. For example, a score of -3 represents asymmetric loser; +3 represents asymmetric gainer; -2 represents whether a brand gain or lose with respect to competing brands; 1 represents symmetric; and 0 represents none.

Shown in Table 4 below, is the competitor watch list table for brand 1 generated based on the brand competitive positioning matrix illustrated in the Table 3 above. Table 4 highlights score of brand 1 with respect to its competing brands, i.e., brands 2 to brand 7. The score is an indication of the type of relationship brand 1 has with its competing brand.

**Table 4**

| Watch List competitors for Brand 1 | |
|---|---|
| **Competing Brand** | **Score** |
| Brand 2 | -3 |
| Brand 7 | -2 |
| Rest of the brands | 0 |

As seen from Table 4 the overall score of brand 1 in accordance with the brand competitive positioning matrix is -5. Similar competitor watch list tables can be generated for each of the brands to indicate their mutual relationship based on a score.

Further in an example, based on the brand competitive positioning matrix and the competitor watch list table, another impact output, namely a cumulative score and rank table may be generated. Referring again to the present case of seven brands, Table 5 below shows the cumulative score and rank table generated in accordance with the brand competitive positioning matrix of table 3 and the competitor watch list table of Table 4.

**Table 5**

| Brand | Cumulative Score | Rank |
|-------|-----------------|------|
| Brand 1 | -5 | 6 |
| Brand 2 | 4 | 1 |
| Brand 3 | 1 | 2 |
| Brand 4 | -4 | 5 |
| Brand 5 | -1 | 4 |
| Brand 6 | 0 | 3 |
| Brand 7 | -1 | 4 |

The cumulative score for a particular brand is obtained from the sum of the score obtained from the competitor watch list table. As is evident from the above tables, the score of brand 1 with respect to brand 2, brand 7 and rest of the brands is -3, -2 and 0 respectively. The cumulative score is obtained by computing the sum of the scores as (-3) + (-2) + (0) = -5. Further, a rank is assigned to each of the brands with respect to the descending order of their scores as shown in the table.

Although the method 100 for evaluating competitive brand positioning of a plurality of stationary sales brands has been described referring to certain modeling/simulation techniques, it is to be understood that the subject matter is not necessarily limited to the specific modeling/simulation techniques described. Other modeling/simulation techniques, either existing or that may be developed in future, to perform the same function as the described modeling/simulation techniques can also be used.

It will also be appreciated that the system and the method are described herein in reference to 'sales' of a brand. It will be apparent to one skilled in the art that such a reference is not a limitation, rather the concept explained in context of 'sales' may be extended to other similar applications, such as 'shares'.

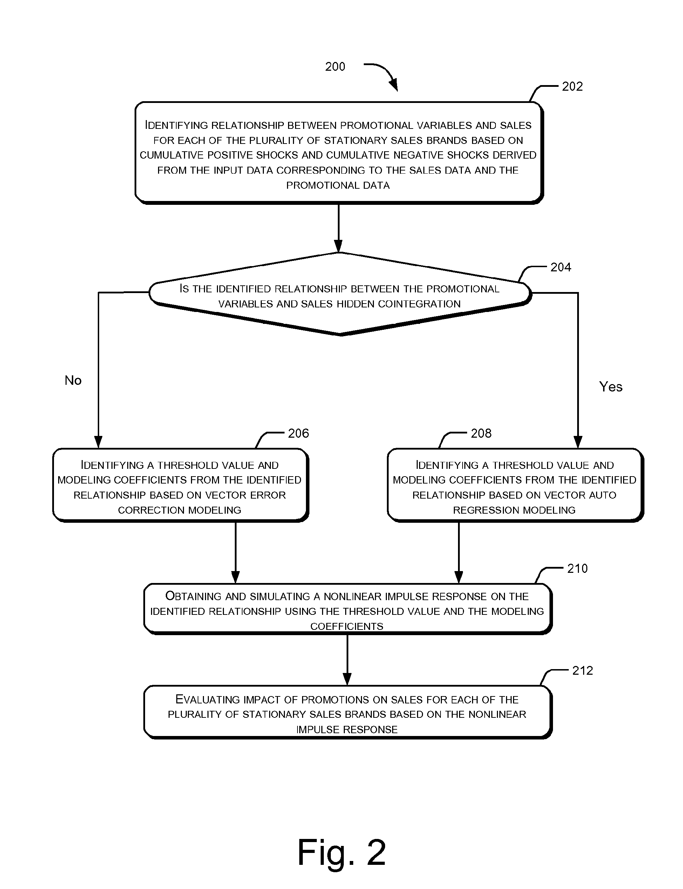

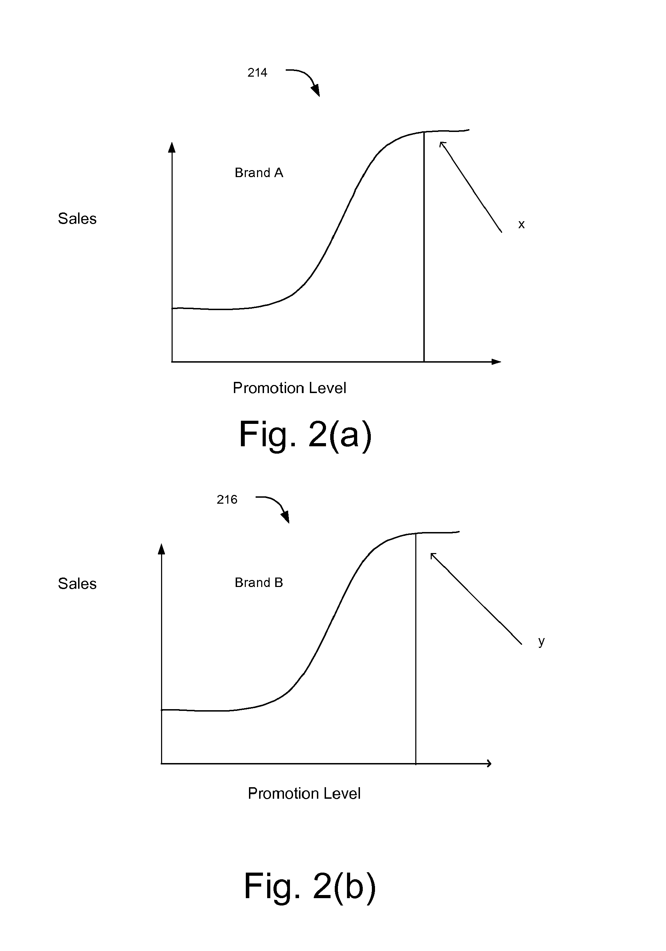

Figure 2 illustrates a method 200 for evaluating impact of promotions on sales for each of the plurality of stationary sales brands based on a nonlinear impulse response, in accordance to an embodiment of the present subject matter. The method 200 is implemented in computing device, such as a system. The method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network.

The order in which the method is described is not intended to be construed as a limitation, and any number of the described method blocks can be combined in any order to implement the method, or an alternative method. Additionally, individual blocks may be deleted from the method without departing from the spirit and scope of the subject matter described herein. Furthermore, the method can be implemented in any suitable hardware, software, firmware, or combination thereof.

At block 202, the method 200 includes identifying relationship between promotional variables and sales for each of the plurality of stationary sales brands. As apparent, sales of each brand reacts differently to changes in promotional variables. Accordingly, the method 200 is applied individually on each of the brands to study the impact of frequency of promotion on the brand. The relationship between promotional variables and the sales may be based on the cumulative positive shocks and the cumulative negative shocks derived from the input data corresponding to the sales data and the promotional data as explained previously in the description of method 100 in accordance with equations (2), (3a) and (3b). The relationship may be identified to be hidden co-integration or a relation other than hidden co-integration.

At block 204, the method 200 decides whether the identified relationship between the promotional variables and the sales is hidden co-integration or a relation other than hidden co-integration. The identification criterion is based on formulation of an equation by inclusion of the promotional variables in the set of equations (4), (5), (6), (7) mentioned in the foregoing description. This is elaborated below.

Consider equation (4) reproduced below for reference:

$$x_{At}^+ = \beta^+ x_{Bt}^+ + z_{1t} \quad (4)$$

In an example, the promotional variables including cumulative positive promotion shocks ($p^+$) and cumulative negative promotion shocks (p⁻) are accounted for in equation (4) as follows. $x^+_{At} = \beta^+ x^+_{Bt} + z_{1t} + p^+ + p^-$ (8). In a similar manner, the promotional variables are included in equations (5), (6) and (7).

The satisfaction of equation (8) forms the basis of the identification criterion as whether the relationship between the promotional variables and the sales is hidden co-integration or a relation other than hidden co-integration. The method 200 further represents the identified relationship as in the form of a vector equation as:

$$Y_{At} = \alpha + \beta Y_{At-1} + \sigma Y_{At} I\left(\sum_{i=t}^{t-4} 1(\Delta p_{At-i} > 0) > 1\right) + Z_{At} \quad (9)$$

where, $Y_{At} = [x_{At}, {}_{pAt}]$ represents a vector equation corresponding to the sales and the promotional variables of the brand A. In a similar way, vector equation corresponding to the brand B is also obtained. $\alpha$ is a generic coefficient, $\beta$ is a regression coefficient, $\sigma$ is the coefficient determining a threshold value for the frequency of promotions, $I\left(\sum_{i=t}^{t-4} 1(\Delta p_{At-i} > 0) > 1\right)$ represents nonlinear effect on sales for consecutive promotions for a predefined time periods, and $Z_{At}$ is the error vector.

At block 206, i.e., the 'yes' branch of block 204, the method 200 identifies modeling coefficients $\alpha$, $\beta$ and the coefficient $\sigma$ determining the threshold value for the frequency of promotions from the vector equation (9) obtained earlier using vector error correction modeling (VECM) if the identified relationship between the promotional variables and the sales is a relation other than hidden co-integration.

At block 208, i.e., the 'no' branch of block 204, the method 200 identifies modeling coefficients $\alpha$, $\beta$ and the coefficient $\sigma$ determining the threshold value for the frequency of promotions from the vector equation (9) obtained earlier, using vector auto regression (VAR) modeling if the identified relationship between the promotional variables and the sales is hidden co-integration.

At block 210, the method 200 obtains a non linear impulse response, based on the modeling coefficients and the threshold value obtained earlier between the promotional variables and the sales for each of the plurality of stationary sales brands. In one implementation, the nonlinear impulse response is indicative of impact of the frequency of promotions on the sales for each of the plurality of stationary sales brands. The method 200 further simulates the nonlinear impulse response using a simulation technique. In one implementation, the simulation technique used is monte carlo simulation technique. In other examples, any simulation technique can be used to simulate the impulse response.

At block 212, the method 200 produces an output of the nonlinear impulse response indicative of the impact of the frequency of promotions on the sales for each of the plurality of stationary sales brands. In an example, the nonlinear impulse response for the brand A and the brand B is as shown in Figure 2a and 2b where point x and point y on the nonlinear impulse response of brand A and brand B depicted as 214 and 216, respectively, indicates optimal promotional level for brand A and brand B, respectively.

Although the method 200 for evaluating impact of promotions on sales for each of the plurality of stationary sales brands has been described referring to certain modeling/simulation techniques, it is to be understood that the subject matter is not necessarily limited to the specific modeling/simulation techniques described. Other modeling/ simulation techniques, either existing or that may be developed in future, to perform the same function as the described modeling/simulation techniques can also be used.

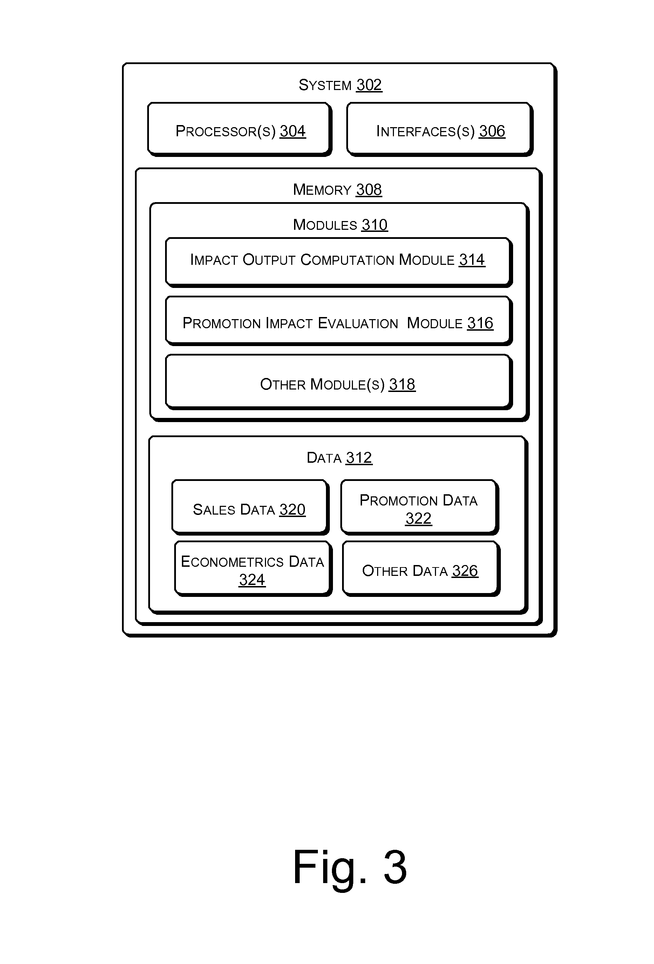

Fig. 3 illustrates various components of a brand positioning and promotion impact evaluation system 302, hereinafter referred to as system 302, for economic modeling of a stationary time-series using hidden co-integration, to elaborate the details of the operation of the system 302 according to an embodiment of the present subject matter.

As illustrated, the system 302 includes one or more processor(s) 304, one or more interfaces 306 and a memory, such as a memory 308, coupled to the processor(s) 304. The interfaces 306 may include a variety of software and hardware interfaces, for example, interfaces for peripheral device(s), such as a keyboard, a mouse, an external memory, and a printer. Further, the interfaces 306 may enable the system 302 to communicate with different computing systems. The interfaces 306 can facilitate multiple communications within a wide variety of networks and protocol types, including wired networks, for example, local area network (LAN), cable, etc., and wireless networks, such as Wireless LAN (WLAN), cellular, or satellite.

The processor 304 can be a single processing unit or a number of units, all of which could include multiple computing units. The processor 304 may be implemented as one or more microprocessors, microcomputers, microcontrollers, digital signal processors, central processing units, state machines, logic circuitries, and/or any devices that manipulate signals based on operational instructions. Among other capabilities, the processor 304 is configured to fetch and execute computer-readable instructions and data stored in the memory 308.

The functions of the various elements shown in the figures, including any functional blocks labeled as "processor (s) ", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read- only memory (ROM) for storing software, random access memory (RAM), and non volatile storage.

The memory 308 may include any computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes. The memory 308 includes module(s) 310 and data 312. The modules 310, amongst other things, include routines, programs, objects, components, data structures, etc., which perform particular tasks or implement particular abstract data types. The modules 310 further include, for example, a impact output computation (IOC) module 314, a promotion impact evaluation module (PIE) 316, and other modules 318.

The data 312 serves, amongst other things, as a repository for storing data processed, received and generated by one or more of the modules 310. The data 312 includes sales data 320, promotion data 322, econometrics data 324, and other data 326. The sales data 320 may include the historical sales data of brands for which impact output and the effect of the promotions are being evaluated. The promotion data 322 may include data pertaining to promotion variables for various brands. The econometrics data 322 may include data generated as the result of the functioning of the IOC module 314 and the PIE module 316. The other data 326 includes data generated as a result of the execution of one or more other modules 318.

In implementation, the system 302 receives input data corresponding to the sales data and the promotion data of a plurality of stationary sales brands. In an implementation, the system 302 may receive the input data from any external database (not shown) associated with the system 302. The input data may include historical sales data over a fixed period of time for the plurality of stationary sales brands. The historical sales data, in an example, may include yearly, monthly or weekly sales data for products of the plurality of brands. In another example, the historical sales data may further include region wise, quarter wise, and/or consumer group wise sales data. The promotion data may include year wise promotion data, region wise promotion data, consumer group wise promotion data, and the like. Further, the external database associated with the system 302 may have stored data related to share markets, stock exchanges, annual reports of various companies and the like. The input data corresponding to the sales data, when received by the system 302, may be stored in the system 302 as the sales data 320. Likewise, the input data corresponding to the promotion data may be stored in the system 302 as the promotion data 322.

Subsequent to the receiving of the input data by the system 302, the IOC module 314 formulates an econometric time-series for the sales and promotion data 320 and 322 of each of the plurality of stationary sales brands received by the system 302. In an implementation, the IOC module 314 may be configured to formulate the econometric time-series based on the sales data and the promotion data 320 and 322, for example, based on any conventional mathematical tool. In accordance with one embodiment of the present subject matter, the econometric time series may be mathematically represented as depicted by equation(1).

In an implementation, the IOC module 314 is further configured to decompose the formulated econometric time-series into positive shocks and negative shocks for the sales data and the promotion data for each of the plurality of stationary sales brands. As described earlier, the positive shocks and the negative shocks are respectively indicative of an increase in sales of the brands or a decrease in sales of the brands. The IOC module 314 may further be configured to develop the cumulative positive and cumulative negative shock series for the sales data and the promotion data for each of the plurality of stationary sales brands. In an implementation, the IOC module 314 may develop the cumulative positive and cumulative negative shock series based on the positive shocks and the negative shocks obtained by decomposing the econometric time-series. The cumulative positive and cumulative negative shock series for each of the plurality of stationary sales brands may be mathematically represented as depicted in equations3(a) and 3(b) respectively. Further, the cumulative positive and negative shock series may be represented in the form of a table as depicted by the Table (2)

In an implementation, the cumulative positive and cumulative negative shock series of the promotion data may further be used by the system 302 in order to evaluate an impact of frequency of promotions on the sales of each of the plurality of stationary sales brands, as described later.

Subsequent to developing of the cumulative positive and negative shock series, the IOC module 314 may identify a hidden co-integration relationship between each pair of brands from amongst the plurality of stationary sales brands. In an implementation, the IOC module 314 may identify the hidden co-integration between the pair of brands based on the cumulative positive and negative shock series of the sales data and the promotion data. Referring to the example of brand A and brand B described earlier in relation to method 100, the hidden co-integration relationships may be mathematically depicted as shown in the equations (4), (5), (6), and (7). As described previously, the relationship between the pair of brands may be "symmetric", "asymmetric", "lose/gain to each other", and the like. Further, based on the cumulative positive shocks and the cumulative negative shocks, cumulative scores and rankings of each of the plurality of stationary brand sales may be obtained.

In one implementation, based on the identified relationships, scores and rankings of each of the plurality of stationary brand sales, the IOC module 314 may further be configured to generate the impact outputs for each of the plurality of stationary sales brands. As mentioned already, the impact outputs are indicative of a competitive position of a brand with respect to one or more brands of the same category. The impact output may be represented in various tabular forms such as a brand competitive positioning matrix, a competitor watch list table and a cumulative score and rank table. Examples of representations of the impact output for various brands are as illustrated in tables 3, 4 and 5.

In an implementation, the PIE module 316 may be configured to evaluate the effect of frequency of the promotions on the sales for each of the plurality of stationary sales brands. The PIE module 316 may identify a relationship between promotional variables and sales of each of the plurality of stationary sales brands. In an example, the promotional variables and the sales may be based on the promotion data and the sales data, as already described in foregoing description. Further, the relationship between the promotional variables and the sales may be based on the cumulative positive and cumulative negative shock series as developed by the IOC module 314.

Subsequent to the identifying of the relationship between the promotional variables and the sales, the PIE module 316 may be configured to perform a check to ascertain, for each of the plurality of stationary sales brands, whether the relationship is hidden co-integration or otherwise. In an implementation, if the relationship is hidden co-integration, the PIE module 316 may identify a threshold value and modeling coefficients from the relationship. In an example, the threshold value and the modeling coefficients may be identified based on the VAR for a hidden co-integration relationship, as described earlier. On the other hand, if the relationship is other than hidden co-integration, the PIE module 316 may be configured to identify the threshold value and the modeling coefficients based on the VECM model.

Further to the identification of the modeling coefficients and the threshold value, the PIE module 316 may be further configured to obtain a non linear impulse response based the application of simulation techniques on the relationship between the promotion variables and the sales for each of the plurality of stationary sales brands. Based on the non linear impulse response, the PIE module 316 may evaluate an impact of the frequency of promotions on the sales for each of the plurality of stationary sales brands, as already described. In an example, the graphical representation of the effect of frequency of promotions on the sales for brand A and brand B is as depicted in Figure 2(a) and 2(b).

Although embodiments for a brand positioning and promotion impact evaluation system have been described in language specific to structural features and/or methods, it is to be understood that the present subject matter is not necessarily limited to the specific features or methods described. Rather, the specific features and methods are disclosed as exemplary implementations for the brand positioning and promotion impact evaluation system.

## Claims

1. A method for competitive brand positioning of a plurality of stationary sales brands, the method comprising:

   decomposing econometric time series of sales data and promotional data for each of the plurality of stationary sales brands into positive and negative shocks;
   developing cumulative positive shocks series and cumulative negative shocks series for each of the plurality of stationary sales brands;
   identifying hidden co-integration relationships between at least a pair of brands from amongst the plurality of stationary sales brands, wherein the identifying is based on the cumulative positive shocks series and the cumulative negative shocks series; and
   generating an impact output indicative of the competitive brand positioning of the plurality of stationary sales brands, wherein the generating is based on the identified hidden co-integration relationship.

2. The method as claimed in claim 1, wherein the method further comprises:

   obtaining input data corresponding to the sales data and promotional data for each of the plurality of stationary sales brands; and
   formulating econometric time series of the sales data and promotional data for each of the plurality of stationary sales brands.

3. The method as claimed in claim 1, wherein the impact output comprises at least one of a brand competitive positioning matrix, a competitor watch list, and a cumulative score and rank table, such that the brand competitive positioning matrix, the competitor watch list, and the cumulative score and rank table indicate a relative position of a brand from amongst the plurality of stationary sales brands with respect to another brand from amongst the plurality of stationary sales brands.

4. A method for evaluating impact of promotional variables on sales of a stationary sales brand, the method comprising:

identifying a hidden co-integration relationship between the promotional variables and the sales of the stationary sales brand, wherein the relationship is a representation based on modeling coefficients and a threshold value;
estimating the modeling coefficients and the threshold value for the hidden co-integration relationship;
obtaining a nonlinear impulse response based on the modeling coefficients and the threshold value for the hidden co-integration relationship; and
simulating the nonlinear impulse response to evaluate the impact of the promotional variables on the sales for the stationary sales brand.

5. The method as claimed in claim 4, wherein the estimating of the modeling coefficients and the threshold value are based on at least one of vector error correction model (VECM) and vector auto regression (VAR) model.

6. The method as claimed in claim 5, wherein the simulating is based on monte carlo simulation technique.

7. The method as claimed in claim 4 further comprising:

obtaining input data corresponding to the promotional variables and the sales of the stationary sales brand;
formulating, based on the obtaining, an econometric time series of the promotional variables and the sales of the stationary sales brand;
decomposing, based on the formulating, the econometric time series of the promotional variables and the sales of the stationary sales brand into positive and negative shocks; and
developing, based on the decomposing, cumulative positive shocks and cumulative negative shocks series for the promotional variables and the sales to identify the hidden co-integration relationship between the promotional variables and the sales.

8. A brand positioning and impact evaluation system (302) comprising:

a processor (304); and
a memory (308) coupled to the processor (304), the memory (308) comprising:

an impact output computation module (314) configured to generate at least one impact output to indicate a relative position of a brand from amongst the plurality of stationary sales brands with respect to another brand from amongst the plurality of stationary sales brands based on an identification of a hidden co-integration relationship between the sales data and promotional data of each pair of brands from amongst the plurality of stationary sales brands; and
a promotion impact evaluation module (316) configured to evaluate an impact of promotional variables on sales for each of the plurality of stationary sales brands.

9. The brand positioning and impact evaluation system (302) as claimed in claim 8, wherein the impact output computation module (314) provides the impact output as at least one of a brand competitive positioning matrix, a competitor watch list, and a cumulative score and rank table.

10. The brand positioning and impact evaluation system (302) as claimed in claim 8, wherein the promotion impact evaluation module (316) is further configured to identify a hidden co-integration relationship between promotional variables and the sales of each of the plurality of stationary sales brand.

11. A computer-readable medium having embodied thereon a computer program for executing a method comprising:

decomposing econometric time series of sales data and promotional data for each of the plurality of stationary sales brands into positive and negative shocks;
developing cumulative positive shocks series and cumulative negative shocks series for each of the plurality of stationary sales brands;
identifying hidden co-integration relationships between at least a pair of brands from amongst the plurality of stationary sales brands, wherein the identifying is based on the cumulative positive shocks series and the cumulative negative shocks series; and

generating an impact output indicative of the competitive brand positioning of the plurality of stationary sales brands, wherein the generating is based on the identified hidden co-integration relationship.

100

RECEIVING INPUT DATA CORRESPONDING TO SALES DATA AND PROMOTIONAL DATA OF A PLURALITY OF STATIONARY SALES BRANDS — 102

FORMULATING ECONOMETRIC TIME SERIES OF THE SALES AND THE PROMOTIONAL DATA FOR EACH OF THE PLURALITY OF STATIONARY SALES BRANDS — 104

DECOMPOSING THE ECONOMETRIC TIME SERIES OF THE SALES DATA AND THE PROMOTIONAL DATA INTO POSITIVE AND NEGATIVE SHOCKS FOR EACH OF THE PLURALITY OF STATIONARY SALES BRANDS — 106

DEVELOPING CUMULATIVE POSITIVE SHOCKS AND CUMULATIVE NEGATIVE SHOCKS SERIES FOR THE SALES DATA AND THE PROMOTIONAL DATA FOR EACH OF THE PLURALITY OF STATIONARY SALES BRANDS — 108

IDENTIFYING HIDDEN COINTEGRATION RELATIONSHIP BETWEEN A PAIR OF BRANDS FOR EACH OF THE PLURALITY OF STATIONARY SALES BRANDS BASED ON THE CUMULATIVE POSITIVE SHOCKS AND THE CUMULATIVE NEGATIVE SHOCKS SERIES — 110

GENERATING AN IMPACT OUTPUT INDICATIVE OF COMPETITIVE BRAND POSITIONING WITHIN A CATEGORY FOR EACH OF THE PLURALITY OF STATIONARY SALES BRANDS — 112

# Fig. 1

200

202

IDENTIFYING RELATIONSHIP BETWEEN PROMOTIONAL VARIABLES AND SALES FOR EACH OF THE PLURALITY OF STATIONARY SALES BRANDS BASED ON CUMULATIVE POSITIVE SHOCKS AND CUMULATIVE NEGATIVE SHOCKS DERIVED FROM THE INPUT DATA CORRESPONDING TO THE SALES DATA AND THE PROMOTIONAL DATA

204

IS THE IDENTIFIED RELATIONSHIP BETWEEN THE PROMOTIONAL VARIABLES AND SALES HIDDEN COINTEGRATION

No

Yes

206

IDENTIFYING A THRESHOLD VALUE AND MODELING COEFFICIENTS FROM THE IDENTIFIED RELATIONSHIP BASED ON VECTOR ERROR CORRECTION MODELING

208

IDENTIFYING A THRESHOLD VALUE AND MODELING COEFFICIENTS FROM THE IDENTIFIED RELATIONSHIP BASED ON VECTOR AUTO REGRESSION MODELING

210

OBTAINING AND SIMULATING A NONLINEAR IMPULSE RESPONSE ON THE IDENTIFIED RELATIONSHIP USING THE THRESHOLD VALUE AND THE MODELING COEFFICIENTS

212

EVALUATING IMPACT OF PROMOTIONS ON SALES FOR EACH OF THE PLURALITY OF STATIONARY SALES BRANDS BASED ON THE NONLINEAR IMPULSE RESPONSE

Fig. 2

214

Brand A

Sales

x

Promotion Level

# Fig. 2(a)

216

Brand B

Sales

y

Promotion Level

# Fig. 2(b)

SYSTEM 302

PROCESSOR(S) 304

INTERFACES(S) 306

MEMORY 308

MODULES 310

IMPACT OUTPUT COMPUTATION MODULE 314

PROMOTION IMPACT EVALUATION MODULE 316

OTHER MODULE(S) 318

DATA 312

SALES DATA 320

PROMOTION DATA 322

ECONOMETRICS DATA 324

OTHER DATA 326

Fig. 3

Europäisches
Patentamt

European
Patent Office

Office européen
des brevets

# EUROPEAN SEARCH REPORT

Application Number

EP 13 15 9774

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/251877 A1 (LAWRENCE RICHARD D [US] ET AL) 13 October 2011 (2011-10-13) * paragraph [0015] - paragraph [0016] * * paragraph [0023]; figures 2-3 * ----- | 1-11 | INV. G06Q30/00 |
| X | WO 2010/104619 A1 (HENERY RAK CONSULTING PARTNERS [US]; SHARMA ALOK [US]) 16 September 2010 (2010-09-16) * paragraph [0106] - paragraph [0110]; claim 1; figure 1 * ----- | 1-11 | |
| X | US 2009/024445 A1 (SHAN JERRY Z [US]) 22 January 2009 (2009-01-22) * paragraph [0017] * ----- | 1-11 | |
| X | US 2007/260624 A1 (CHUNG CHRISTINA Y [US] ET AL CHUNG CHRISTINA YIP [US] ET AL) 8 November 2007 (2007-11-08) * paragraph [0026] - paragraph [0074] * ----- | 1-11 | |
| X | US 2007/043615 A1 (DAHLEH MUNTHER A [US] ET AL) 22 February 2007 (2007-02-22) * paragraph [0117] * ----- | 1-11 | TECHNICAL FIELDS SEARCHED (IPC) G06Q |
| X | US 2010/228604 A1 (DESAI PARITOSH [US] ET AL) 9 September 2010 (2010-09-09) * paragraph [0208] - paragraph [0214]; figure 8 * ----- | 1-11 | |

The present search report has been drawn up for all claims

| Place of search | Date of completion of the search | Examiner |
|---|---|---|
| Munich | 22 May 2013 | Lavin Liermo, Jesus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 13 15 9774

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2013

| Patent document cited in search report | | Publication date | Patent family member(s) | | Publication date |
|---|---|---|---|---|---|
| US 2011251877 | A1 | 13-10-2011 | NONE | | |
| WO 2010104619 | A1 | 16-09-2010 | NONE | | |
| US 2009024445 | A1 | 22-01-2009 | NONE | | |
| US 2007260624 | A1 | 08-11-2007 | US 2007260624 A1 | | 08-11-2007 |
| | | | US 2011161331 A1 | | 30-06-2011 |
| US 2007043615 | A1 | 22-02-2007 | NONE | | |
| US 2010228604 | A1 | 09-09-2010 | NONE | | |

EPO FORM P0459

For more details about this annex : see Official Journal of the European Patent Office, No. 12/82